# EUROPEAN PATENT APPLICATION

(11) **EP 1 818 999 A1**
(43) Date of publication of application: **15.08.2007**
(21) Application number: 04802593.6
(22) Date of filing: 30.12.2004
(51) Int. Cl.: H01M 2/08, H01M 6/06, H01M 6/12

(54) **A BUTTON-SHAPED ALKALINE BATTERY**

(30) Priority: 02.12.2004 CN 200420116760 U
(71) Applicant: Chung Pak Battery Works Ltd.,, Kowloon, Hong Kong (CN)
(72) Inventor: YE, Jinhua 7/F, Chung Pak Commercial Bldg., Kowloon Hong Kong (CN)
(74) Representative: Kramer - Barske - Schmidtchen
(86) International application number: PCT/CN2004/001581
(87) International publication number: WO 2006/058467

(57) **Abstract**

A Hg-free button alkaline cell comprising: positive electrode can, negative electrode cap, positive active material mixture and negative active material mixture. Said negative electrode cap has outward flange. Separator lies between the positive active material mixture and the negative active material mixture, and gasket with bottom and outer wall places on the separator. The open-end portion of said positive electrode and the upper end portion of the outer wall of the gasket are bent to the negative electrode cap, the upper end portion of the outer wall of the gasket fastened on the flange of the negative electrode cap and leaning against the outer surface of the negative electrode cap; sealant layer is filled in the interspace between the flange of the negative electrode cap and the bottom and outer wall of the gasket. The cell of the present utility model is sealed by the sealant layer, which can prevent electrolyte from leakage and reduce the difficulty of the process.

## Description

### FIELD OF THE UTILITY MODEL

This utility model relates to button alkaline cells, and more particularly to the button alkaline cells used for mini electron devices such as electronic watch, electronic table calculator and so on.

### BACKGROUND OF THE UTILITY MODEL

In the prior art, the button alkaline cells are fabricated as follows:

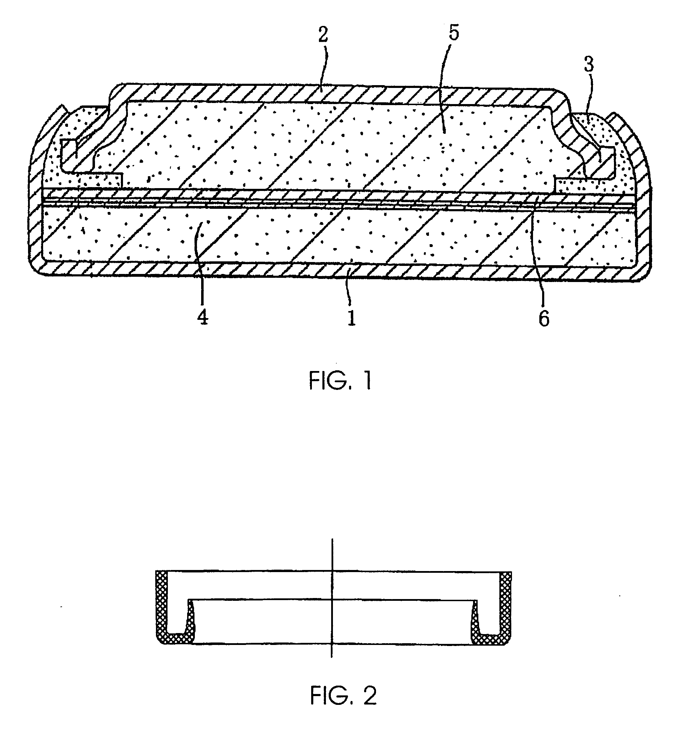

Referring to Fig. 1, positive electrode can 1 contains positive active material mixture 4 comprising manganese dioxide as active materials. Negative electrode cap 2 employs iron as substrate, and comprises a plated nickel on the outer layer and a plated indium, tin or copper on the inner layer, is assembled with gasket (insulated ring). The negative electrode cap 2 contains negative active material mixture 5 comprising Hg-free zinc powders or zinc alloy powers as negative active materials. Separator 6 separates the positive active material mixture 4 and negative active material mixture 5. The button cell is injected with the alkaline electrolyte, and is sealed by being punched in the specific sealing mould.

In the button cells of the above general type, hydrogen gas is evolved during the cell storage, which causes the increase of the inner cell pressure and electrolyte leakage, when the negative active material mixture 5 contains Hg-free zinc or zinc alloy. Such problem can be restrained by the use of the negative active material mixture containing amalgamation zinc powders. However, mercury is restricted for the reason of environment protection, so it is essential to fabricate Hg-free and leak-proof button alkaline cells.

### SUMMARY OF THE UTILITY MODEL

Accordingly, the object of the present utility model is to provide an Hg-free (and leak-proof) button alkaline cell.

The object of the present utility model is realized as follows: said button alkaline cell comprises positive electrode can, negative electrode cap, positive active material mixture and negative active material mixture. Said negative electrode cap has outward flange, separator lies between the positive active material mixture and the negative active material mixture, and gasket with bottom and outer wall places on the separator. The open-end portion of said positive electrode and the upper end portion of the outer wall of the gasket are bent to the negative electrode cap, the upper end portion of the outer wall of the gasket fastened on the flange of the negative electrode cap and leaning against the outer surface of the negative electrode cap. Sealant layer is filled in the interspace between the flange of the negative electrode cap and the bottom and outer wall of the gasket.

Compared with the state of the prior art, the present utility model shows button alkaline cells by sealing via sealant layer, which effectively prevents alkaline electrolyte of the cells from leakage. Further, during the process, it is not necessary to heavily bend the open-end portion of the positive electrode to further increase the gasket shrinkage so as to keep a satisfied resistance against electrolyte leakage, instead, the open-end portion of the positive electrode and the upper end portion of the outer wall of the gasket are bent to the negative electrode cap, the upper end portion of the outer wall of the gasket fastened on the flange of the negative electrode cap and leaning against the outer surface of the negative electrode cap, the bottom of the flange of the negative electrode cap is not distorted to the center of the cell in the process, which also reduces the difficulty of the process.

### BRIEF DESCRIPTION OF THE FIGURES

FIG. 1 shows a sketch drawing of a button alkaline cell of the prior art.
FIG. 2 shows a sketch drawing of the gasket of the present utility model.
FIG. 3 and 4 show the assembled illustration of the gasket and the negative electrode cap of the present utility model.
FIG. 5 and 6 show a sketch drawing of a button alkaline cell of the present utility model.
FIG. 7 shows a sketch drawing of a separate covering (or separate layer) according to another embodiment of the present utility model.
FIG 8 shows the assembled illustration of the separate covering (or separate layer) and the negative electrode cap according to another embodiment of the present utility model.
FIG. 9 shows the assembled illustration of the separate covering (or separate layer), the negative electrode cap and the gasket according to another embodiment of the present utility model.
FIG. 10 shows a sketch drawing of a button alkaline cell according to another embodiment of the present utility model.

### DETAILED DESCRIPTION OF THE UTILITY MODEL

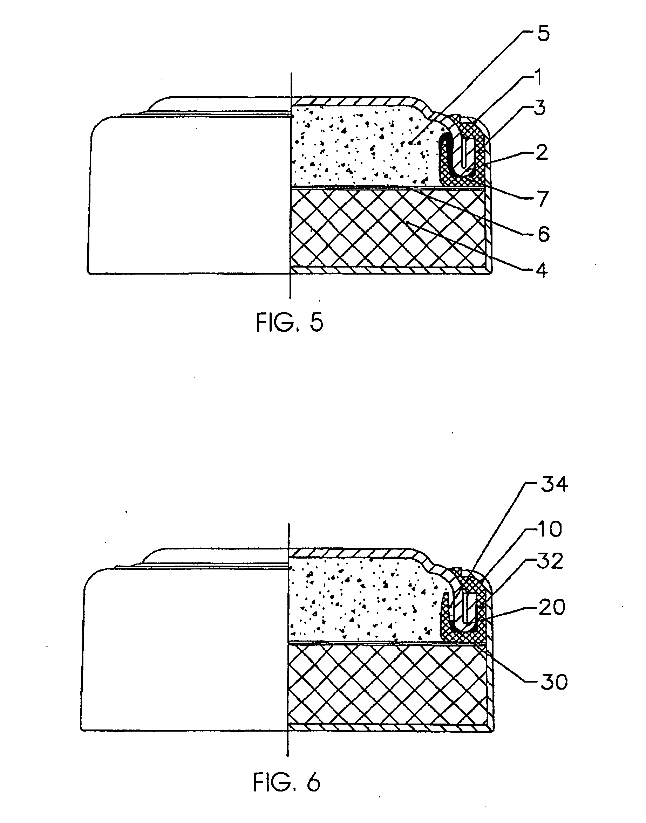

Referring to FIG. 5 and 6 of the drawing, there is shown a button alkaline button cell according to the present utility model comprising a positive electrode can 1 filled with positive active material mixture 4 and a negative electrode cap 2 filled with negative active material mixture 5, separator 6 lying between the positive active material mixture 4 and the negative active material mixture 5, gasket 3 placed on the separator 6.

Said gasket 3 comprises bottom, inner wall 30 and outer wall 32, which are combined to form a groove 34. The thickness of the inner wall 30 decreases along its upward direction. (This technical characteristic differs from that mentioned before.)

Said negative electrode cap 2 has outward U-shaped flange 20, which located in the groove 34 of the gasket 3. The open-end portion 10 of said positive electrode can 1 and the upper end portion of the outer wall 32 of the gasket 3 are bent to the negative electrode cap 2, the upper end portion of the outer wall 32 of the gasket 3 fastened on the U-shaped flange 20 of the negative electrode cap 2 and leaning against the outer surface of the negative electrode cap 2.

Sealant layer 7 is filled in the interspace between the U-shaped flange 20 of the negative electrode cap 2 and the inner wall 30, bottom, outer wall 32 of the gasket 3 to prevent electrolyte from leakage. The sealant layer 7 is made of epoxy resin.

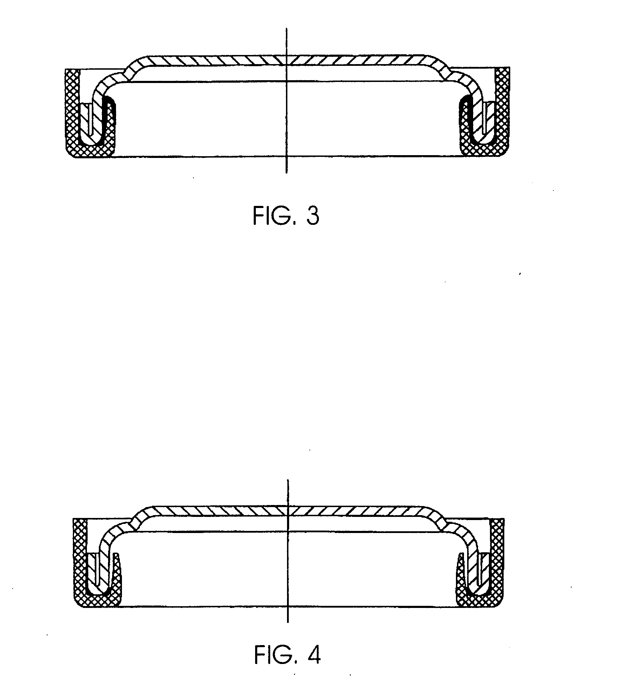

Referring to FIG. 2 to FIG. 6, the cell is assembled as follows: First, gasket 3 is provided; the sealant is injected into the groove 34 of the gasket 3; then the negative electrode cap 2 is assembled, which is filled with negative active material mixture 5, said negative active material mixture 5 comprising the slurry of the Hg-free zinc powder mixture.

The positive electrode can 1 is filled with positive active material mixture 4, which is manganese dioxide mixture. The mixture is pressed as cake shape, then two separators 6 is positioned on the surface of the mixture, then the alkaline electrolyte is injected.

The negative electrode cap 2 is assembled with the positive electrode can 1 by facing the negative active material mixture 5 to the separator 6, then the cell is sealed by being punched in the specific sealing mould, the open-end portion 10 of said positive electrode can 1 and the upper end portion of the outer wall 32 of the gasket 3 are bent to the negative electrode cap 2, the upper end portion of the outer wall 32 of the gasket 3 fastened on the U-shaped flange 20 of the negative electrode cap 2 and leaning against the outer surface of the negative electrode cap 2.

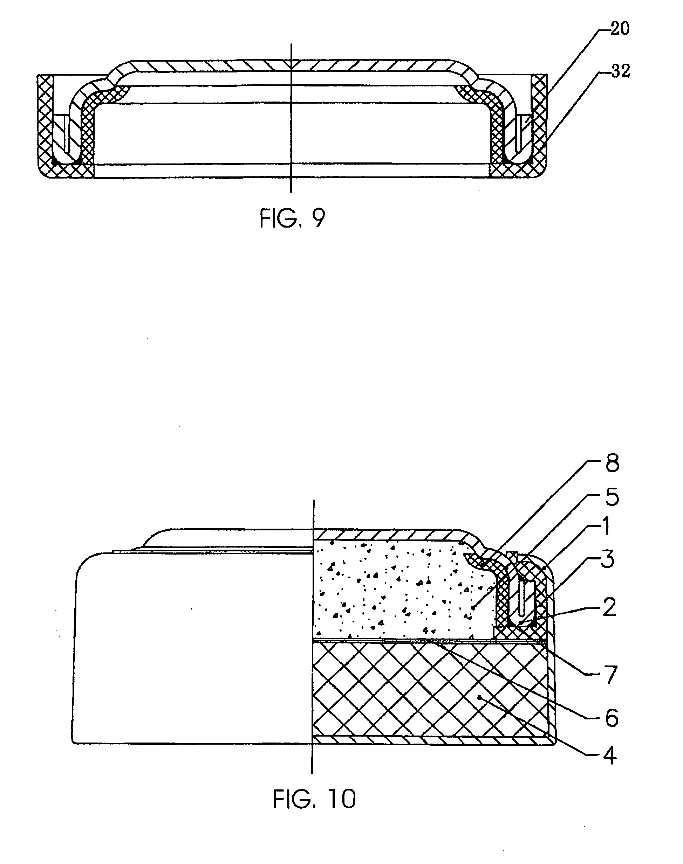

Referring to FIG. 9 and FIG. 10, another embodiment of the present utility model comprises a positive electrode can 1 and a negative electrode cap 2. The positive electrode can 1 is filled with positive active material mixture 4, the negative electrode cap 2 comprises a separate covering (or separate layer), and is filled with negative active material mixture 5. Separator 6 lies between the positive active material mixture 4 and the negative active material mixture 5, and gasket 3 is placed on the separator 6.

Said gasket 3 comprises bottom and outer wall 32.

Said negative electrode cap 2 has outwardly U-shaped flange 20. The open-end portion 10 of said positive electrode can 1 and the upper end portion of the outer wall 32 of the gasket 3 are bent to the negative electrode cap 2, the upper end portion of the outer wall 32 of the gasket 3 fastened on the U-shaped flange 20 of the negative electrode cap 2 and leaning against the outer surface of the negative electrode cap 2.

The separate covering (or separate layer) 8 is attached to the inner wall of the negative electrode cap 2. The shape of said separate covering (or separate layer) 8 corresponds with the shape of the inner wall of the negative electrode cap 2, the bottom of the separate covering is fastened to the bottom of the gasket 3, and combined with the bottom and the outer wall 32 of the gasket 3 to form a groove. The U-shape flange 20 of the negative electrode cap 2 is located in the groove. Sealant layer 7 is filled in the interspaces between the U-shaped flange 20 of the negative electrode cap 2, the separate covering (or separate layer) 8 and the bottom and outer wall 32 of the gasket 3 to prevent electrolyte from leakage. The sealant layer 7 is made of epoxy resin.

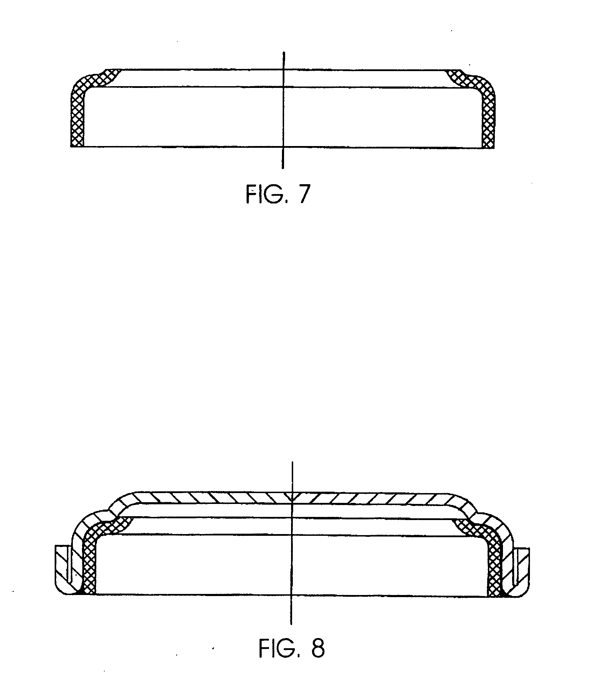

Referring to FIG. 7 to FIG. 10, the cell is assembled as follows: First, the negative electrode cap 2 is provided; the separate covering (or separate layer) 8 is attached to the inner wall of the negative electrode cap 2 by sealant; a sealant layer 7 is coated on the bottom of the separate covering (or separate layer) 8 and the bottom of the U-shaped flange of the negative electrode cap 2, which then is located in the gasket 3; the negative electrode cap is filled with negative active material mixture 5, said negative active material mixture 5 comprising the slurry of the Hg-free zinc powder mixture.

The rest assembling is identical with that of the Example 1.

The L736 (LR41) cells are made according to the said Hg-free button alkaline cells. The shelf performances of the cells shelved at 45 °C and 90 % relative humidity and at 60 °C and 90 % relative humidity respectively are shown as follows:

| | Leakage rate shelved at 45 °C and 90 % RH | | | | | Height (mm) change shelved at 45 °C for 60 days |
|---|---|---|---|---|---|---|
| | 20 days | 30 days | 40 days | 50 days | 60 days | 60 days |
| Example 1 | 0 | 0 | 0 | 0 | 0 | 0.006 |
| Example 2 | 0 | 0 | 0 | 0 | 0 | 0.005 |
| The prior art | 0 | 0 | 0 | 0 | 0 | 0.006 |
| | | | | | | |

| | Leakage rate shelved at 60°C and 90 % RH | | | | | Height (mm) change shelved at 60 °C for 28 days |
|---|---|---|---|---|---|---|
| | 14 days | | | 28 days | | 28 days |
| Example 1 | 0 | | | 0 | | 0.006 |
| Example 2 | 0 | | | 0 | | 0.005 |
| The prior art | 0 | | | 10 | | 0.006 |

It can be obtained from the results that using the gasket 3 and the sealant layer 7 filled in the interspaces can reduce the electrolyte leakage to realize the anticipated Hg-free and leak-proof button alkaline cells.

In the state of the prior art, during the process of extruding inwardly the open-end portion of the positive electrode, when the open-end portion of the positive electrode is bent along the radius direction of the cell to further increase gasket shrinkage so as to keep a satisfied resistance against electrolyte leakage; the compression force of the gasket on the negative electrode cap is also increased, which often causes the flange of the negative electrode cap distorted to the center of the cell. For this reason, it is impossible to obtain the needed compression of the gasket to keep the satisfied resistance against electrolyte from leakage, so the resistance keeping electrolyte against leakage decreases, and the electrolyte is easy to be leaked. The cell of the present utility model is sealed by the sealant layer 7. During the process, it is not necessary to bend the open-end portion 10 of the positive electrode can 1 to further increase gasket 3 shrinkage so as to keep the satisfied resistance of preventing electrolyte from leakage, instead, the open-end portion 10 of the positive electrode can 1 and the upper end portion of the outer wall 32 of the gasket 3 are bent to the negative electrode cap 2, the upper end portion of the outer wall 32 of the gasket 3 fastened on the flange 20 of the negative electrode cap 2 and leaning against the outer surface of the negative electrode cap 2. The bottom of the flange 20 of the negative electrode cap 2 is not distorted to the center of the cell in the process, which also reduces the difficulty of the process.

While the present utility model has been described in detail with reference to the preferred embodiments, those skilled in the art will appreciate that various modifications and substitutions can be made thereto without departing from the spirit and scope of the present utility model as set forth in the appended claims.

## Claims

1. A button alkaline cell comprising: positive electrode can, negative electrode cap, positive active material mixture and negative active material mixture, said negative electrode cap having outward flange, separator lying between the positive active material mixture and the negative active material mixture, gasket with bottom and outer wall placed on the separator, wherein the open-end portion of said positive electrode and the upper end portion of the outer wall of the gasket are bent to the negative electrode cap, the upper end portion of the outer wall of the gasket is fastened on the flange of the negative electrode cap and leaning against the outer surface of the negative electrode cap; and sealant layer is filled in the interspace between the flange of the negative electrode cap and the bottom, the outer wall of the gasket.

2. A button alkaline cell according to claim 1, wherein said gasket further comprises inner wall; the bottom, the inner wall and the outer wall of the gasket form a groove, the flange of the negative electrode cap is located in the groove of the gasket; and a sealant layer is filled in the interspace between the flange of the negative electrode cap and the bottom, the inner wall, the outer wall of the gasket.

3. A button alkaline cell according to claim 2, wherein the thickness of the inner wall decreases along its upward direction.

4. A button alkaline cell according to claim 1, wherein said button alkaline cell also comprises a separate covering (or separate layer) attached to the inner wall of the negative electrode cap by sealant, the shape of said separate covering (or separate layer) corresponding with the shape of the inner wall of the negative electrode cap, the bottom of the separate covering is fastened to the bottom of the gasket, and combined with the bottom and the outer wall of the gasket to form a groove; the flange of the negative electrode cap being located in the groove; the sealant layer filled in the interspace between the flange of the negative electrode cap, the separate covering (or separate layer) and the bottom and outer wall of the gasket.

5. A button alkaline cell according to claim 1, wherein said flange of the negative electrode cap is U-shaped.
